# FASCICULE DE BREVET EUROPEEN

(11) **EP 0 901 640 B1**
(45) Date de publication et mention de la délivrance du brevet: **02.01.2003**
(21) Numéro de dépôt: 98904208.0
(22) Date de dépôt: 23.01.1998
(51) Int. Cl.: G01S 7/40

(54) **PROCEDE DE MODELISATION FINE DU FOUILLIS DE SOL RECU PAR UN RADAR**
VERFAHREN ZUR FEINMODELLIERUNG DES BODENECHOS EINES RADAREMPFÄNGERS
METHOD FOR FINE MODELLING OF GROUND CLUTTER RECEIVED BY RADAR

(30) Priorité: 27.01.1997 FR 9700842
(43) Date de publication de la demande: 17.03.1999
(73) Titulaire: Thales, 75008 Paris (FR)
(72) Inventeur: AGNESINA, Eric, Thomson-CSF S.C.P.I., F-94117 Arcueil Cedex (FR); HENRY, Jean-Philippe, Thomson-CSF S.C.P.I., F-94117 Arcueil Cedex (FR); LE HELLARD, Daniel, Thomson-CSF S.C.P.I., F-94117 Arcueil Cedex (FR); MORUZZIS, Michel, Thomson-CSF S.C.P.I., F-94117 Arcueil Cedex (FR)
(74) Mandataire: Lucas, Laurent Jacques
(86) Numéro de dépôt international: FR9800123
(87) Numéro de publication internationale: WO98033074

(56) Documents cités:
- WO-A-92/22050
- US-A- 4 625 209
- MORGAN J R ET AL: "SIMULATION OF RADAR RETURNS FROM LAND USING A DIGITAL TECHNIQUE" INTERNATIONAL CONFERENCE ON RADAR, LONDON, 18 - 20 OCTOBER, 1982, no. PROC. 1982, INSTITUTION OF ELECTRICAL ENGINEERS, pages 240-244, XP002028532

## Description

La présente invention se rapporte à un procédé de modélisation fine du fouillis de sol reçu par un radar.

Depuis longtemps, les radaristes cherchent, dans un but d'évaluation de performances, à simuler les échos radar qui seront renvoyés par le sol ("fouillis" en français et "clutter" en anglais) lorsque le radar sera déployé et mis en service sur son lieu d'utilisation. Et ceci, sans avoir à attendre que le radar y soit effectivement implanté.

Les caractéristiques du clutter étant très dépendantes du lieu d'implantation, il est important de savoir modéliser avec exactitude le clutter de sol auquel le radar aura à faire face dans les endroits où il sera implanté.

Comme on n'a pas de cartes donnant les caractéristiques du clutter sur la Terre entière et dans toutes les bandes de fréquence et sous toutes les polarisations, les données de départ les mieux appropriées sont les modèles numériques de terrain. Ceux-ci couvrent pratiquement toute la planète et donnent, sous forme numérisée, en tout point d'une grille à pas raisonnablement fin, l'altitude et la nature du sol, ainsi que l'indication de la nature des éléments qu'il porte (forêts, routes, rivières, constructions, ...). Ils sont le point de départ de beaucoup de simulations modernes du clutter de sol.

Les méthodes connues, par exemple les logiciels de modélisation à partir de modèles numériques de terrain développés par le MIT aux USA, tiennent compte, pour chaque élément de terrain considéré, de l'angle d'éclairement, de la propagation des ondes entre le radar et le lieu considéré (avec, pour certaines, prise en compte des effets de masque et des réflexions) et d'une estimation de la réflectivité du sol déduite de l'angle d'incidence et de la catégorie de paysage rencontrée. La hauteur moyenne des objets portés par l'élément de terrain considéré n'est utilisée que pour calculer l'angle d'incidence et l'atténuation de propagation.

Au mieux, le clutter de sol y est calculé en déterminant, à partir de la hauteur du sol, éventuellement augmentée de la hauteur moyenne des objets, l'angle d'incidence des ondes reçues du radar, et en estimant ensuite une réflectivité radar (rapport de la surface équivalente radar à l'unité de surface physique). Cette réflectivité est choisie parmi plusieurs valeurs possibles, le choix étant guidé par la bande de fréquence utilisée, la polarisation, l'angle d'éclairement et le type de paysage (rural, urbain, plaine, montagne).

Les résultats obtenus avec les méthodes de l'art antérieur présentent, par rapport à la réalité constatée, des erreurs importantes chaque fois que le sol porte des éléments d'extension verticale significative. En effet, ceux-ci sont les contributeurs majoritaires du clutter de sol dans les incidences faibles, voire rasantes, et le choix, relativement arbitraire, d'une valeur de réflectivité correspondant à la moyenne d'un paysage, ne permet pas de les prendre correctement en compte, d'où les écarts constatés.

Ceci rend moins crédibles les prédictions de performances qu'on en déduit, en particulier dans le cas des radars de surface qui voient le sol sous des incidences très faibles, et pour lesquels les éléments portés par le sol sont la principale source d'échos à amplitudes très dispersées.

La présente invention a pour objet un procédé de modélisation fine du fouillis de sol reçu par un radar en incidence faible, à partir d'un modèle numérique de terrain, qui permette de modéliser le fouillis de tout terrain, quelle que soit sa couverture (végétation, et/ou constructions) à l'échelle de la cellule de résolution, c'est-à-dire en reproduisant le plus fidèlement possible la texture des cartes de fouillis.

Le procédé de l'invention consiste, à partir d'un modèle numérique de terrain maillé, à identifier les cellules comportant des éléments présentant une hauteur supérieure à la résolution du modèle, à déterminer, pour les cellules concernées, la hauteur moyenne de ces éléments, à découper en hauteur les cellules en tranches et à calculer la puissance rétrodiffusée par chaque cellule concernée en remplaçant son contenu par des réflecteurs élémentaires répartis sur toute sa hauteur en tenant compte des cellules avoisinantes et du profil du terrain situé entre le radar et la cellule considérée.

La présente invention sera mieux comprise à la lecture de la description détaillée d'un mode de réalisation, pris à titre d'exemple non limitatif et illustré par le dessin annexé, sur lequel :
- la figure 1 est un diagramme simplifié représentant un élément de fouillis modélisé d'un obstacle quelconque,
- la figure 2 est un diagramme représentant la densité de probabilité du nombre de réflecteurs élémentaires d'un obstacle, pour deux hauteurs différentes, et
- la figure 3 est un diagramme d'un exemple de fonction déterminant le nombre moyen de réflecteurs élémentaires le long de la hauteur d'un obstacle.

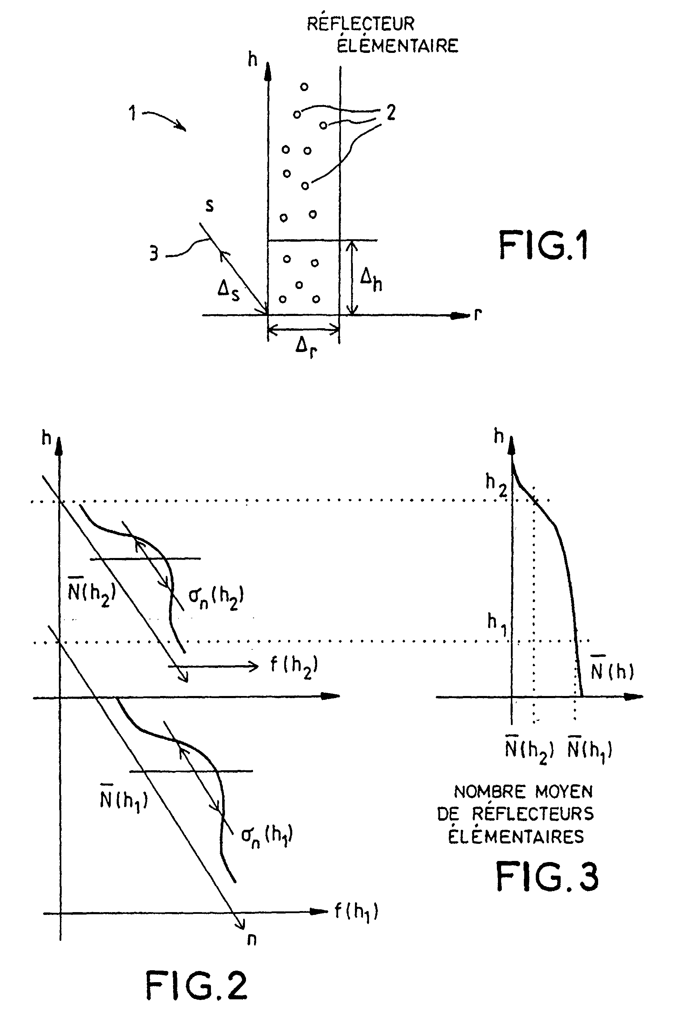

On a représenté en figure 1 une partie d'un élément de fouillis 1, par exemple une forêt modélisée, composé d'un grand nombre de réflecteurs élémentaires 2 (discrétisés), ces réflecteurs élémentaires représentant dans le cas présent les feuilles des arbres. On a figuré en 3 le faisceau radar incident et réfléchi. Un fouillis étant, pour un radar, un objet. complexe, pour lequel il n'est pas envisageable de localiser les différents réflecteurs élémentaires, l'invention propose de considérer que cet objet est constitué d'un grand nombre de réflecteurs dont les phases des échos renvoyés sont aléatoires. Dans ce cas, si les réflecteurs sont éclairés de manière uniforme par le radar, la surface équivalente radar totale tend vers la somme des surfaces équivalentes élémentaires. On est donc amené à examiner la distribution en hauteur de ces réflecteurs élémentaires.

On a représenté en figure 2 la densité de probabilité du nombre de réflecteurs élémentaires du fouillis en question, pour deux altitudes différentes, h1 et h2. On a supposé que la forêt à modéliser est un milieu homogène. Dans ce cas, tous les réflecteurs sont identiques, et leur surface équivalente radar ne dépend pas de leur altitude h.

En figure 3, on a représenté l'évolution du nombre moyen (ou de la densité) des réflecteurs élémentaires en fonction de leur altitude h. Pour une altitude h donnée, le nombre de réflecteurs est une variable aléatoire, dont la valeur moyenne est représentée sur cette figure 3. Il est facile, pour l'homme de l'art, de calculer alors cette densité moyenne et l'écart-type de la distribution des réflecteurs élémentaires pour une hauteur donnée.

Selon l'invention, on divise l'élément de fouillis considéré, que l'on a ainsi modélisé par distribution verticale de ses réflecteurs, en N segments élémentaires pour chacun desquels on calcule, de façon connue en soi, le champ moyen rétrodiffusé, qui dépend donc des paramètres caractéristiques des réflecteurs élémentaires, à savoir leur surface équivalente radar élémentaire et leur densité moyenne en fonction de leur altitude et la valeur du champ incident pour cette altitude, ce champ dépendant des obstacles situés entre le radar et l'élément de fouillis considéré.

Pour la mise en oeuvre du procédé de l'invention, on utilise un modèle numérique existant de terrain. Un tel modèle est formé de mailles de terrain dont les dimensions et la résolution sont actuellement convenables (par exemple des mailles de 60 x 90 m environ), d'autant plus qu'on peut les améliorer actuellement en complétant leurs informations par des descriptions statistiques, et le cas échéant par des renseignements issus d'autres sources. Bien entendu, lorsque la qualité de ces modèles sera améliorée, le procédé de l'invention offrira une modélisation encore plus proche de la réalité.

Selon le procédé de l'invention, on détermine parmi les cellules du maillage de ce modèle celles qui comportent des éléments réflecteurs qui s'étendent en hauteur de façon significative, c'est-à-dire des éléments (feuilles d'arbres, constructions, ...) dont la hauteur est supérieure à la résolution du modèle ( par exemple un pas d'environ 2 à 5 mètres). Pour chacune de ces cellules, on calcule la puissance totale rétrodiffusée vers le radar, de la façon exposée ci-dessus. On précisera simplement que l'on se sert alors soit de la hauteur moyenne des éléments contenus dans la cellule si le modèle numérique de terrain l'indique, soit en la déduisant de la nature de ces éléments. Par exemple, dans le cas d'une forêt composée principalement d'arbres à feuilles persistantes, on fixe sa hauteur à 20 m avec un écart-type de 5 m.

Le procédé de l'invention part d'un modèle numérique de terrain existant, et consiste à calculer, pour les cellules du maillage identifiées par le modèle numérique de terrain comme porteuses d'éléments ayant une extension verticale, la puissance totale rétrodiffusée vers le radar. Ceci est fait en utilisant la hauteur moyenne des éléments de la cellule si le modèle numérique de terrain l'indique, sinon en la déduisant de la nature de ces éléments.

La hauteur moyenne étant estimée, on calcule la puissance rétrodiffusée en remplaçant le contenu de la cellule concernée par des réflecteurs élémentaires répartis sur toute sa hauteur et correspondant à un découpage par tranches d'altitude. Les caractéristiques radioélectriques et la répartition géométrique de ces réflecteurs élémentaires sont estimées à partir des indications décrivant la nature des objets que la cellule comporte. Le calcul du signal reçu par le radar est ensuite fait en déterminant, pour chaque tranche de hauteur, la puissance reçue puis rétrodiffusée en tenant compte, en particulier, des cellules avoisinantes et du profil du terrain situé entre le radar et la cellule considérée. Ce calcul est répété pour toutes les cellules du maillage.

Les comparaisons effectuées entre le clutter de sol simulé grâce au procédé de l'invention et le clutter de sol observé montrent que le procédé de l'invention conduit à une représentation très fidèle de la réalité, y compris pour les zones comportant de nombreux éléments présentant une extension verticale. Il améliore donc la représentativité des simulations dans des endroits où les méthodes de l'art antérieur se trouvent en défaut.

L'amélioration apportée est d'autant plus utile que c'est dans ces endroits particuliers que se génèrent les échos de sol les plus dispersés en amplitude, donc les plus susceptibles de nuire au bon fonctionnement du radar. Il est en effet établi que la grande dynamique du clutter de sol reçu par un radar de surface (donc un radar qui voit le sol sous des angles d'incidence faibles, contrairement, par exemple aux radars aéroportés) est due en grande partie aux éléments verticaux portés par le sol. En apportant une solution efficace pour la modélisation de ceux-ci et des masques radioélectriques qu'ils engendrent, le procédé de l'invention rapproche le simulé de l'observé, et précisément là où c'est utile pour la prédiction des performances des radars de surface.

On va maintenant exposer deux exemples particuliers non limitatifs de mise en oeuvre du procédé de l'invention.

### 1°) PLAINE ET FORET

Soit une zone comportant, d'après un modèle numérique de terrain, une forêt précédée d'une plaine nue (c'est à dire sans constructions, ni pylônes, ni arbres) dans une configuration telle que la lisière de la forêt est en visibilité directe du radar. Le clutter produit par la plaine sera simulé en utilisant les méthodes de l'art antérieur : réflectivité moyenne pour la fréquence utilisée, l'angle d'incidence des ondes et la nature du terrain (prairie, champs cultivés, marais, ...).

Le clutter provenant de la lisière de la forêt sera calculé au moyen d'une structure équivalente constituée de disques diélectriques orientés aléatoirement et répartis en altitude au dessus du sol proportionnellement au complément à 1 de l'intégrale d'une fonction gaussienne. Cette fonction gaussienne représente la distribution de la hauteur de la forêt, dont la moyenne indiquée par le modèle numérique de terrain est égale à 16 mètres et l'écart-type à 3 mètres. Pour le reste de la forêt, on procède de façon analogue, en tenant compte des masques constitués par les obstacles rencontré, qui atténuent le signal radar.

Le diamètre des disques est déduit du type de forêt indiqué par le modèle numérique de terrain, par exemple 5 cm pour le type de feuillus indiqué, et la densité des disques est prise à 8 par m² suite à l'analyse de mesures réelles.

La permittivité relative des disques diélectriques est prise égale, pour la bande de fréquence utilisée (bande L) à 20 - j6, valeur déduite de l'analyse de mesures réelles.

La structure équivalente est ainsi complètement définie et le clutter correspondant complètement calculable.

### 2°) CONSTRUCTIONS

De même, le clutter provenant de zones bâties (zone industrielle, ville, village) est calculé après détermination complète de la structure équivalente. Par exemple, pour une zone industrielle (valeurs déduites de l'analyse de mesures réelles):
nombre de réflecteurs élémentaires (plaques diélectriques verticales orientées aléatoirement): 0.03 par m²,
   - répartition des réflecteurs élémentaires : complément à 1 de l'intégrale d'une distribution gaussienne de moyenne 30 mètres au dessus du sol et d'écart-type 10 mètres,
   - permittivité relative des plaques diélectriques : 20 - j2 pour la bande de fréquence utilisée (bande L),
   - aire moyenne des plaques diélectriques : 1 m².

Là encore, on comprend que la structure équivalente est complètement définie et le clutter correspondant complètement calculable.

Le procédé de l'invention améliore la fidélité de la simulation par rapport aux méthodes existantes, en mettant en oeuvre une méthode particulière de calcul de la réflectivité radar des éléments présentant une extension verticale (arbres, bâtiments, pylônes, réservoirs, ...) et vus par le radar.

Le procédé de l'invention a été validé par des comparaisons entre du clutter simulé et du clutter réel sur diverses zones géographiques. L'écart entre le réel et le simulé est significativement moindre qu'avec les méthodes traditionnelles.

## Revendications

1. Procédé de modélisation fine du fouillis de sol reçu par un radar, **caractérisé en ce qu'**il consiste, à partir d'un modèle numérique de terrain maillé, à identifier les cellules comportant des éléments présentant une hauteur supérieure à la résolution du modèle, à déterminer, pour les cellules concernées, la hauteur moyenne de ces éléments, à découper en hauteur les cellules en tranches et à calculer tranche par tranche la puissance rétrodiffusée par chaque cellule concernée en remplaçant son contenu par des réflecteurs élémentaires répartis sur toute sa hauteur en tenant compte des cellules avoisinantes et du profil du terrain situé entre le radar et la cellule considérée.

2. Procédé selon la revendication 1, **caractérisé en ce que** les réflecteurs élémentaires sont répartis selon une distribution dont les paramètres statistiques sont déterminés d'après la nature desdits éléments.

3. Procédé selon la revendication 2, **caractérisé en ce que** dans le cas d'une forêt, les réflecteurs élémentaires sont des disques diélectriques orientés aléatoirement.

4. Procédé selon la revendication 2, **caractérisé en ce que** dans le cas de constructions, les réflecteurs élémentaires sont des plaques diélectriques rectangulaires verticales orientées aléatoirement.

5. Procédé selon l'une des revendications 2 à 4, **caractérisé en ce que** les paramètres statistiques des distributions utilisées sont déterminés à partir de mesures sur du fouillis réel.

## Patentansprüche

1. Verfahren zur Bildung eines Feinmodells der von einem Radargerät empfangenen Bodenechos, **dadurch gekennzeichnet, daß** es darin besteht, ausgehend von einem digitalen Modell des von einem Gitterraster überzogenen Geländes die Zellen zu identifizieren, die Elemente mit einer die Auflösung des Modells übersteigenden Höhe enthalten, für die betreffenden Zellen die mittlere Höhe dieser Elemente zu bestimmen, die Zellen in Höhenschichten zu zerlegen und für jede Höhenschicht jeder betroffenen Zelle die reflektierte Leistung zu berechnen, indem ihr Inhalt durch über die ganze Höhe verteilte Elementarreflektoren ersetzt wird, und zwar unter Berücksichtigung der benachbarten Zellen und des Profils des Geländes zwischen dem Radargerät und der betreffenden Zelle.

2. Verfahren nach Anspruch 1, **dadurch gekennzeichnet, daß** die Elementarreflektoren gemäß einer Verteilung angeordnet werden, deren statistische Parameter aufgrund der Natur der Elemente bestimmt werden.

3. Verfahren nach Anspruch 2, **dadurch gekennzeichnet, daß** im Fall eines Waldes die Elementarreflektoren dielektrische Scheiben sind, die zufällig ausgerichtet sind.

4. Verfahren nach Anspruch 2, **dadurch gekennzeichnet, daß** im Fall von Hochbauten die Elementarreflektoren zufällig ausgerichtete vertikale und rechtwinklige dielektrische Platten sind.

5. Verfahren nach einem der Ansprüche 2 bis 4, **dadurch gekennzeichnet, daß** die statistischen Parameter der verwendeten Verteilungen aufgrund von Messungen der realen Bodenechos bestimmt werden.

## Claims

1. Process for fine modelling of the ground clutter received by a radar, **characterized in that** it consists, starting from a meshed numerical terrain model, in identifying the cells which comprise elements having a height greater than the resolution of the model, in determining, for the relevant cells, the average height of these elements, in chopping up the cells into height-wise slices and in calculating, slice by slice, the power backscattered by each relevant cell by replacing its contents with elementary reflectors distributed over its entire height while taking into account the adjoining cells and the profile of the terrain situated between the radar and the relevant cell.

2. Process according to Claim 1, **characterized in that** the elementary reflectors are distributed according to a distribution whose statistical parameters are determined in accordance with the nature of the said elements.

3. Process according to Claim 2, **characterized in that** in the case of a forest, the elementary reflectors are randomly oriented dielectric discs.

4. Process according to Claim 2, **characterized in that** in the case of structures, the elementary reflectors are randomly oriented vertical rectangular dielectric plates.

5. Process according to one of Claims 2 to 4, **characterized in that** the statistical parameters of the distributions used are determined from measurements on actual clutter.
